Europäisches Patentamt

European Patent Office

Office européen des brevets

(11) Publication number: **0 400 500**
**A2**

## EUROPEAN PATENT APPLICATION

(21) Application number: 90109979.6

(51) Int. Cl.⁵: **H04Q 3/545, G06F 7/00**

(22) Date of filing: 25.05.90

(30) Priority: 29.05.89 JP 132729/89

(43) Date of publication of application:
**05.12.90 Bulletin 90/49**

(84) Designated Contracting States:
**DE FR GB**

(71) Applicant: **Oki Electric Industry Co., Ltd.**
**7-12, Toranomon 1-chome Minato-ku**
**Tokyo(JP)**

(72) Inventor: **Niitaka, Koji**
**Oki Electric Ind. Co., Ltd., 7-12, Toranomon**
**1-chome, Minato-ku, Tokyo(JP)**

Inventor: **Nakamura, Tamiya**
**Oki Electric Ind. Co., Ltd., 7-12, Toranomon**
**1-chome, Minato-ku, Tokyo(JP)**
Inventor: **Kishino, Kuniaki**
**Oki Electric Ind. Co., Ltd., 7-12, Toranomon**
**1-chome, Minato-ku, Tokyo(JP)**
Inventor: **Inagaki, Toshihiko**
**Oki Electric Ind. Co., Ltd., 7-12, Toranomon**
**1-chome, Minato-ku, Tokyo(JP)**

(74) Representative: **Betten, Jürgen, Dipl.-Ing. et al**
**Patentanwälte Betten & Resch**
**Reichenbachstrasse 19**
**D-8000 München 5(DE)**

(54) A method and apparatus managing tasks.

(57) A method and an apparatus for scheduling tasks, which dispatches high and low priority tasks in predetermined intervals. High priority tasks are performed before low priority tasks while successively executed high priority tasks are counted up to a predetermined value. A low priority task is automatically dispatched and executed if the counted number reaches the predetermined value before all high priority tasks are completed. As a result, the method and apparatus can prevent low priority tasks from remaining without execution for long periods of time even when there are many high priority tasks to be executed.

Fig. 3

EP 0 400 500 A2

## BACKGROUND OF THE INVENTION

### 1. Field of the invention

This invention relates to a method and an apparatus for scheduling the execution of tasks. More particularly, the invention relates to such a method and apparatus which are applicable to a computer processing system included in a communications network, such as a telephone switching system, and which can improve the efficiency with which tasks of different priority can be executed.

### 2. Brief description of the related art

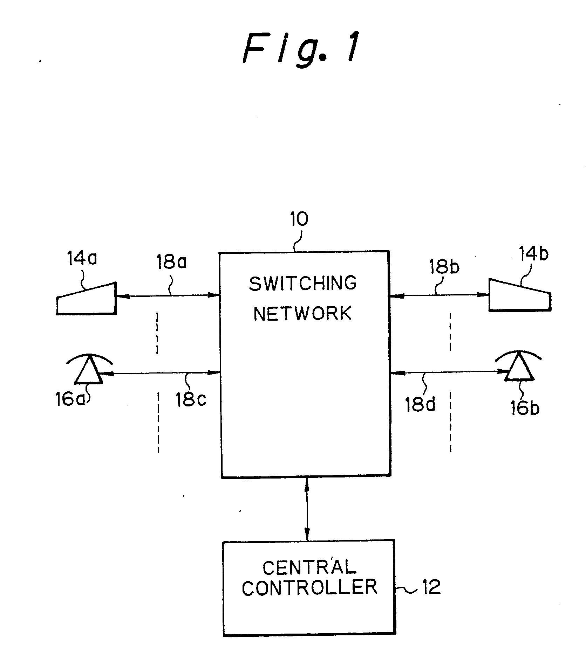

Fig. 1 is a general block diagram of a conventional telephone switching system to which the invention can be applied. As shown in Fig. 1, a switching network 10 is controlled by a central controller 12. In response to a number of control commands from the central controller 12, the switching network 10 switches communication lines 18c and 18d between subscribers 16a and 16b, switches communication paths 18a and 18b between terminals 14a and 14b or executes other procedures such as recovery from overcrowding or the like.

Further, those commands and procedures are divided into a plurality of tasks to be executed by a single processor or plural processors in the central controller 12. In such a digital telephone switching system, the single or plural processors in the central controller 12 execute such tasks in predetermined time slice intervals in predetermined orders of priority. An example of such a task scheduling method is described in "D70 Automatic Telephone Switching System III; Software", pp. 16-19, Nippon Telephone and Telegram edition, February 1, 1983.

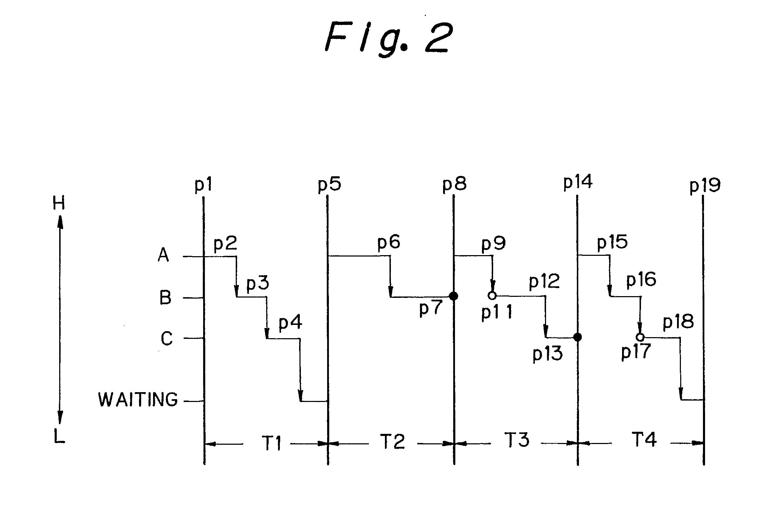

Fig. 2 is a graphical representation of such a conventional task scheduling method. In Fig. 2, assume that many kinds of tasks to be performed by the telephone switching system are classified among several levels of a priority and assigned to queues (not shown). In Fig. 2, further assume that the tasks are assigned among three levels of priority A, B and C where level A is the highest priority level (H), level B is the middle priority level, and level C is the lowest priority level (L).

A processor in the central controller (not shown) starts to search in the queues and executes the tasks in order from the highest priority task to the lowest priority task within basic execution intervals T of fixed duration e.g 4 ms. (T = T1, T2, T3, T4...). If the processor has nothing to execute within the basic execution interval, the processor waits at a "waiting" level until the next basic execution interval.

For example, in a basic execution interval T1, the processor's task execution starts at a point p01. If a task of level A is completed at a point p02 (within the interval T1), the processor starts another task of level B. If the task in the level B is completed at a point p03, the processor starts yet another task of level C. If the task of level C is completed at a point p04, the processor waits for the next interval T2 at the waiting level.

If a long, complicated task which is classified at a high priority level cannot be completed within a basic execution interval, other tasks are postponed. For example, as shown for the basic execution interval T2 in Fig. 2, a task of level B is not completed within the basic execution interval T2 is interrupted (halted) by the start of next basic execution interval T3.

Therefore, during the interval T2, even if there are other tasks in level C, such other tasks are not executed during the interval T2. However, in the next interval T3, after completion of a task in level A, the same task halted at the end of the interval T2 is resumed at a point p08 in the interval T3. In this example, a task of level C being performed during the interval T3 is also halted and resumed at a point p12 in the next basic execution interval T4.

On the other hand, if there are many long, complicated, higher priority tasks of level A or level B which cannot be completed within a basic execution interval, the low priority tasks of level C will not be executed for a long time. Therefore, according to the conventional method, there is a potential that low priority tasks may remain unexecuted for a long time, which might cause a problem for real time processing.

## OBJECT AND SUMMARY OF THE INVENTION

An object of the invention is to prevent low priority tasks from being left without execution for a long time period in a system in which tasks are performed according to assigned priority levels. To realize the object, a task managing method of the invention comprises the steps of: (a) classifying each of the tasks at a respective one of a first priority level and a second priority level, the tasks classified at the first priority level each having a priority which is higher than a priority of the tasks classified at the second priority level; (b) ordering the tasks classified at the first priority level in a queue first and ordering the tasks classified at the second priority level in a second queue; (c) dispatching a task classified at the first priority level if at least one task is ordered in the first queue, and deleting the dispatched task from the first queue; (d) if no task is ordered in the first queue so that no task is dispatched in step (c), dispatching a task classified at the second priority level if at least one task is ordered in the second queue, and deleting the dispatched task from the second queue; (e) executing the task dispatched in step (c) or step (d); (f) repeatedly performing steps (c), (d) and (e); (g) counting a number of tasks classified at the first priority level successively executed in step (d) without executing a task classified at the second priority level; and (h) dispatching and executing a task classified at the second priority level when the counted number reaches a predetermined value.

The apparatus of the invention performs this method with a first memory which stores instructions for performing the method, a second memory which stores the tasks and the queues, and a counter which stores the numbers counted.

According to the invention, if only high priority tasks are executed in succession a predetermined number of times, one low priority task will be executed automatically. Therefore, even if there are long high priority tasks to be executed in a basic execution interval which are many in relation to the number of low priority tasks, the low priority tasks will be executed with a predetermined efficiency.

In a case where there are N different priority levels in tasks, (N: integer, N>1), N-1 counters may be required to count execution of tasks. For example, if the number of priority levels is three, i.e. "high", "middle", and "low", a first counter counts the number of consecutive executions of high priority level tasks. Further, a second counter counts the number of consecutive executions of high or middle priority level tasks. The first counter will be cleared if a low or middle priority level task is executed, and the second counter will be cleared if a low priority task is executed.

## BRIEF DESCRIPTION OF THE DRAWINGS

These and other features and advantages of the invention may be more completely understood from the following detailed description of the preferred embodiments of the invention with reference to the accompanying drawings in which:

Fig. 1 is a general block diagram of a telephone switching system to which the method of the invention may be applied;

Fig. 2 is a chart which is illustrative of a conventional task scheduling method;

Fig. 3 is a block diagram of a device which executes the method of task scheduling of the invention;

Fig. 4 is a chart illustrative of the general function of the invention;

Fig. 5 is a memory map of RAM provided in the device illustrated in Fig. 3;

Fig. 6 is a chart illustrative of the queue structure according to the invention;

Fig. 7 is a flow chart of the task scheduling procedure illustrated in Fig. 4;

Fig. 8 is a flow chart of the task processing procedure illustrated in Fig. 4;

Fig. 9 is a flow chart of the low level queue procedure illustrated in Fig. 8;

Fig. 10 is a flow chart of the high level queue procedure illustrated in Fig. 8; and

Fig. 11 is a chart illustrative of the order of processing the tasks according to the invention.

## DESCRIPTION OF THE PREFERRED EMBODIMENT

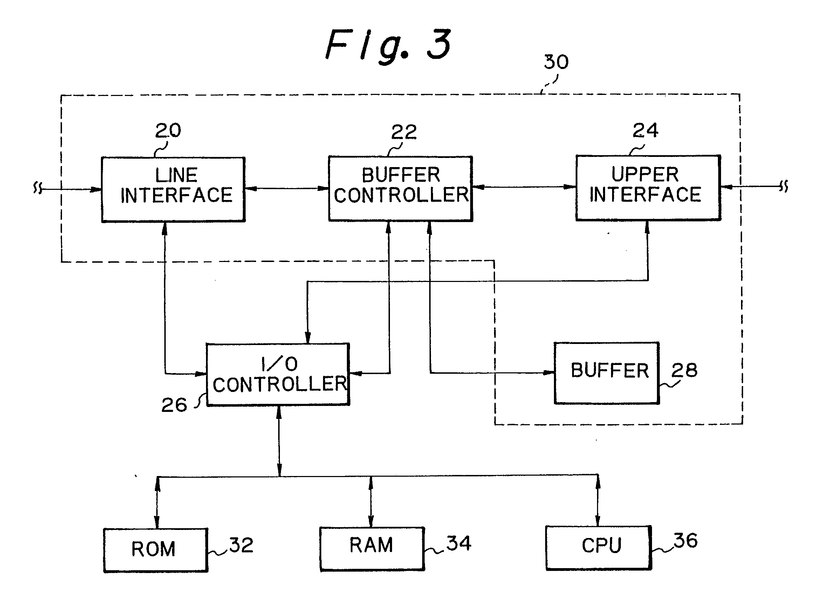

Fig. 3 is a general block diagram of a part of the central controller (layer 2) in the telephone switching system to which the task managing method of the invention is applied. In Fig. 3, a line interface 20 for a communication line is provided to send and receive frames of a digital communication respectively to and from other devices (not shown) provided in physical layer L1.

Layer L1 is the first of seven layers L1, L2,....L7 defined in the International Standard Organization TC97/SC6 reference model. A buffer controller 22 is provided for buffering the frames according to requests from other blocks. A buffer 28 is controlled by the buffer controller 22 for buffering the frames. An upper interface 24 to the next layer L3 provides notification of sending and receiving events and sending and receiving data included in the frames.

Therefore, a unit 30 which includes the line interface 20, buffer controller 22, upper interface 24, and buffer 28 provides an L1/L3 interface. The L1/L3 interface 30 receives the frames and executes a flag insertion or deletion procedure, a zero insertion or deletion procedure, an error correction procedure and many other conventional procedures.

Further, the L1/L3 interface 30 is controlled by a CPU (Central Processing Unit) 36 via an I/O (Input/Output) controller 26 in response to a program (firmware) stored in a ROM (Read Only Memory) 32. The RAM (Random Access Memory) 34 is used as a work area for the program. The method of the invention is also performed in accordance with the program and is applied when the CPU 36 executes a number of tasks having different levels of priority.

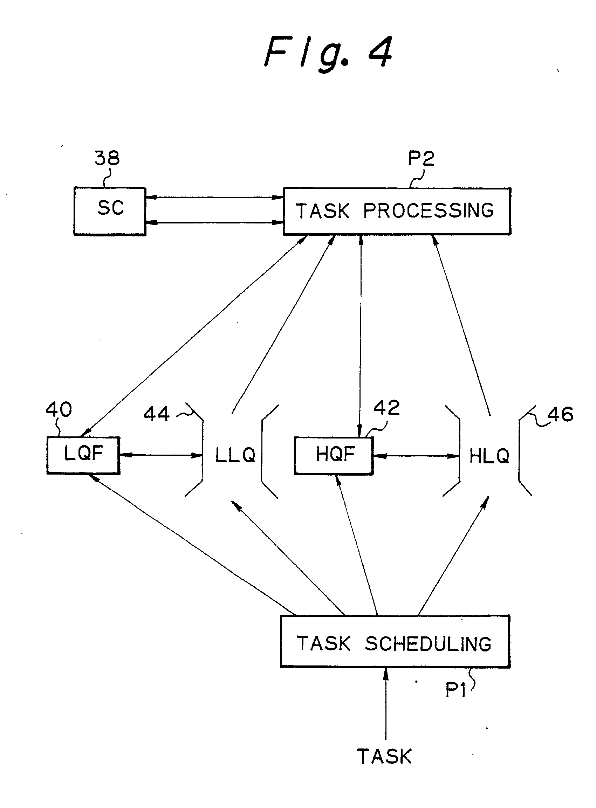

At first, we will explain the general operation of the invention with reference to Fig. 4. As shown in Fig. 4, the task managing operation of the invention comprises two broadly defined procedures including a task scheduling procedure P1, and a task processing procedure P2. Both procedures P1 and P2, can be executed independently. In the system disclosed in Fig. 3, many kinds of tasks relating to communication control, error correction, event managing, and other procedures having different priorities are scheduled according to procedure P1 and processed according to the procedure P2 in almost every communication.

In performing the task scheduling procedure P1, if the CPU 36 receives a request to perform a task, the CPU 36 captures a transaction area in the RAM 34 and writes the task into the transaction area. Further, the CPU 36 analyzes the priority of the task. In the preferred embodiment only two priority levels are used. The invention is also applicable to a case where more than two priority levels are provided as discussed further below. The priority may, for example be classified at a high priority level or at a low priority level, and if the task has a high priority, the CPU 36 registers the transaction in a high priority level queue (HLQ) 46 in the RAM 34 and writes a "1" in a high priority level queue flag (HQF) 42. If the task has a low priority, the CPU 36 registers the task into a low priority level queue (LLQ) 44 in the RAM 34 and writes "1" in a low priority level queue flag (LQF) 40 in the RAM 34. The high priority level queue flag and low priority level queue flag can store values "1" and "0" respectively meaning "ON" and "OFF".

During every basic execution interval which is broken up into subintervals of the task processing procedure P2, the CPU 36 is watching the low priority level queue flag 40 and the high priority level queue flag 42 in a predetermined initial subinterval.

If the low priority level queue flag 40 and the high priority level queue flag 42 both do not contain the value "1", the CPU 36 waits at a waiting level for the next basic execution interval.

If the value "1" is detected in the high priority level queue flag 42, that is, the high priority level queue flag 42 is "ON" and the value "0" is detected in the low priority level queue flag 40, that is, the low priority level queue flag 40 is "OFF", the CPU 36 dispatches one high priority task from the high priority level queue 46 and executes the task.

If the CPU 36 successively executes two high priority tasks, the CPU adds "1" to the contents of a scan counter 38 in the RAM 34. In this embodiment, the contents of the counter 38 can reach up to a value of three.

If the high priority level queue flag 42 is "OFF" and the low priority level queue flag 40 is "ON", the CPU 36 dispatches a low priority task from the low priority level queue 44, executes the task and clears the scan counter 38 to zero.

If both high priority level queue flag 42 and low priority level queue flag 40 are "ON" and the contents of the scan counter 38 is less than three, the CPU 36 dispatches a task from the high priority level queue 46 prior to dispatching a task from the low priority level queue 44. However, if the contents of the counter 38 is three, the CPU dispatches a task from the low priority level queue 44 to be executed and clears the counter 38.

Therefore, if the CPU 36 successively executes three tasks of high priority level, the CPU will automatically execute one task of low priority level. Thereby, the tasks of low priority level will be executed with at least approximately one third of the efficiency of execution of the tasks of high priority level. This will generally prevent low priority tasks from remaining unexecuted for a long period of time.

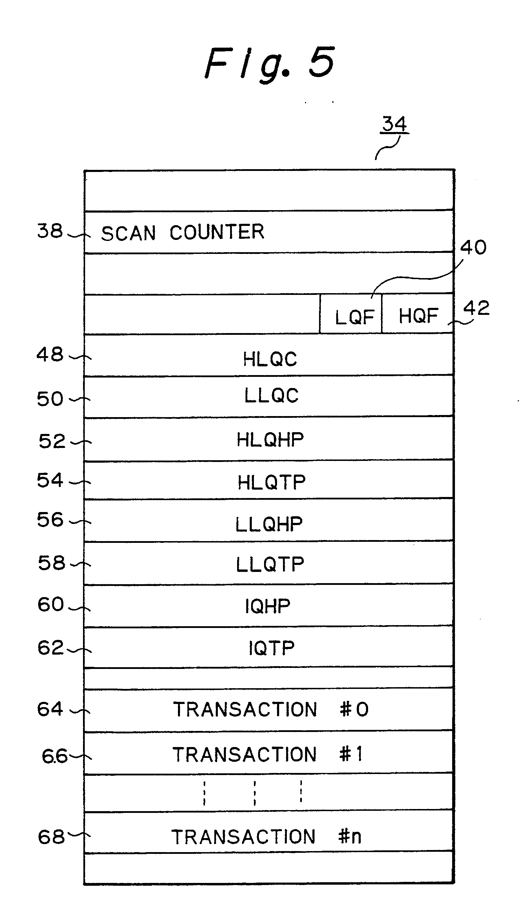

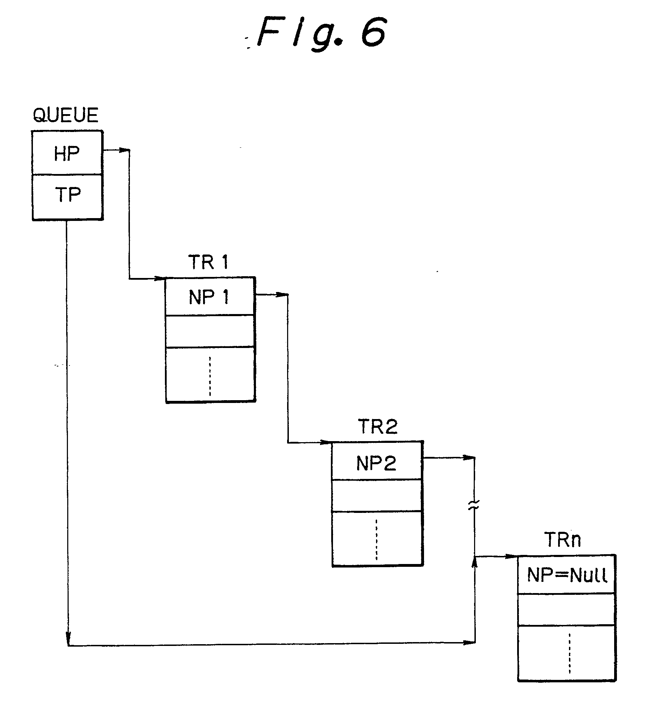

Fig. 5 and Fig. 6 illustrate the queue management operation according to the invention. As shown in Fig. 5, the RAM 34 is used for the scan counter 38, low priority level queue flag 40, low priority level queue 44, high priority level queue flag 42, high priority level queue 46, and the transaction areas 64, 66, and 68. This embodiment has a memory map with a width of 16 bits (a width of one word), and both the low priority level queue flag 40 and the high priority level queue flag 42 each have a one bit width.

The high priority level queue 46 has three areas including a high priority level queue counter (HLQC) 48, a high priority level queue head pointer (HLQHP) 52, and a high priority level queue tail pointer 54 (HLQTP). Similarly, the low priority level queue 44 has three areas including a low priority level queue counter (LLQC) 50, a low priority level queue head pointer 56 (LLQHP), and a low priority level queue tail pointer 58 (LLQTP). An idling queue head pointer (IQHP) 60 and an idling queue tail pointer (IQTP) 62 are also provided for capturing a new transaction area for a new task.

Fig. 6 illustrates the structure of each of those queues. To assist in an explanation of this structure, assume that there is a high or low priority level queue having a head pointer HP and a tail pointer TP. The head pointer HP represents an address of a first transaction area TR1 containing a first task in the RAM 34. At that address (header of the transaction area TR1), there is a next transaction pointer NP1 which represents the address of the next transaction area TR2.

This continues as a chain to the n-th (n being an integer) transaction area (tail transaction area) TRn. The header of the nth transaction area TRn contains a null pointer, for example, consisting of zeros. The tail pointer TP represents an address of the current tail transaction area TRn.

If a new task (not illustrated) is received via I/O device 26 by the CPU 36, the CPU captures a new transaction area TRn + 1 which has a top address NPn received from one of the idling queues idling queue head pointer and idling queue tail pointer. The idling queue head pointer and idling queue tail pointer contain addresses of free address areas for storing new tasks. The CPU 36 rewrites the header of the nth tail transaction area TRn, previously the null pointer, with the new address NPn, and further, rewrites the tail pointer TP of the queue as the new address NPn. Thereby, the new transaction area TRn + 1 can be joined in the chain of the queue.

Next, the CPU 36 searches the free memory area in the RAM 34 and rewrites the now available free addresses into the idling queue head pointer and idling queue tail pointer. On the other hand, when the CPU 36 is ready to execute the task in the first transaction area TR1, the CPU 36 retrieves the head address of this task from the head pointer HP, writes the head pointer HP as the header NP1 of the transaction area TR1 and executes the task.

The above described operation is identical irrespective of the level of priority of the task. When a task to be executed is received by the CPU 36, the CPU analyzes the priority of the task, classifies it, for example, as being of a high or low priority level, and registers the task in the high level queue 46 or low level queue 44.

Further, as shown in Fig. 5, the CPU 36 registers the numbers of high and low priority tasks respectively in the high priority level queue counter 48 and the low priority level queue counter 50. The CPU adds one to the corresponding counter when either a high priority task or a low priority is registered in a the queue and subtract one when a task is executed. The CPU 36 writes a "1" in the low priority level queue flag 40 if the contents of the low priority level queue counter 50 is not zero and writes a "1" in the high priority level queue flag 42 if the contents of the high priority level queue counter is not zero.

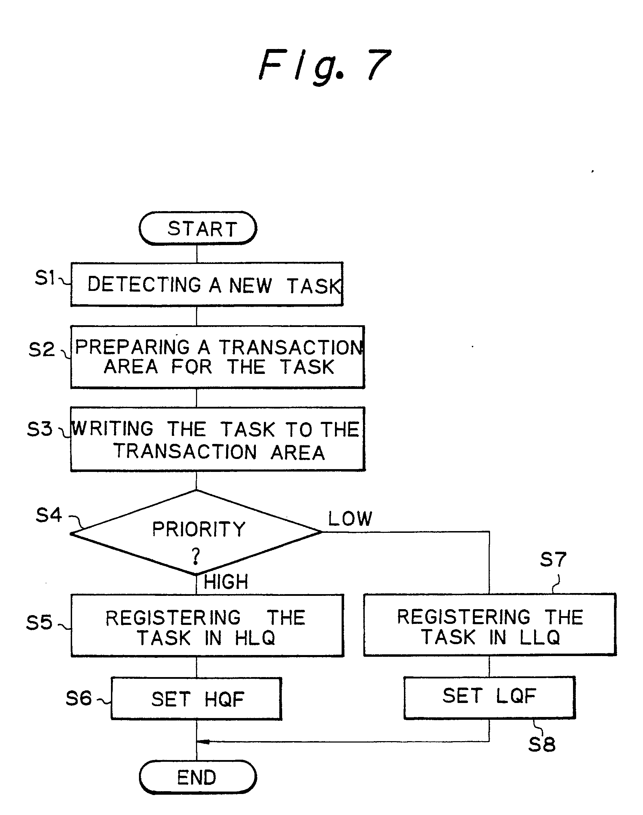

The above operations will now be explained with reference to the flow charts of Fig. 7, Fig. 8, Fig. 9, and Fig. 10.

As shown in Fig. 7, if the CPU 36 requests to execute a new task, (step S1), the CPU 36 prepares a new transaction area in the RAM 34 for the task (step S2) and writes the task into the transaction area (step S3). Further, the CPU 36 analyzes the priority of the task (step S4), and if the task has high priority, the CPU 36 registers the task into the high priority level queue 46 (step S5) and. sets the high priority level queue flag 42 (step S6). If the task has low priority, the CPU 36 registers the task into the low priority level queue 44 (step S7) and sets the low priority level queue flag 40 (step S8).

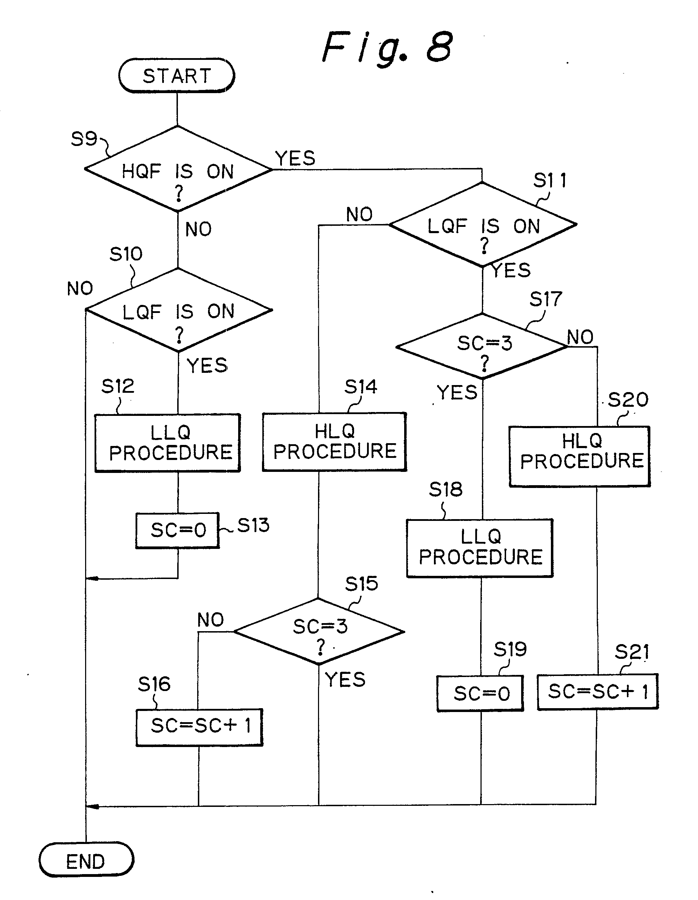

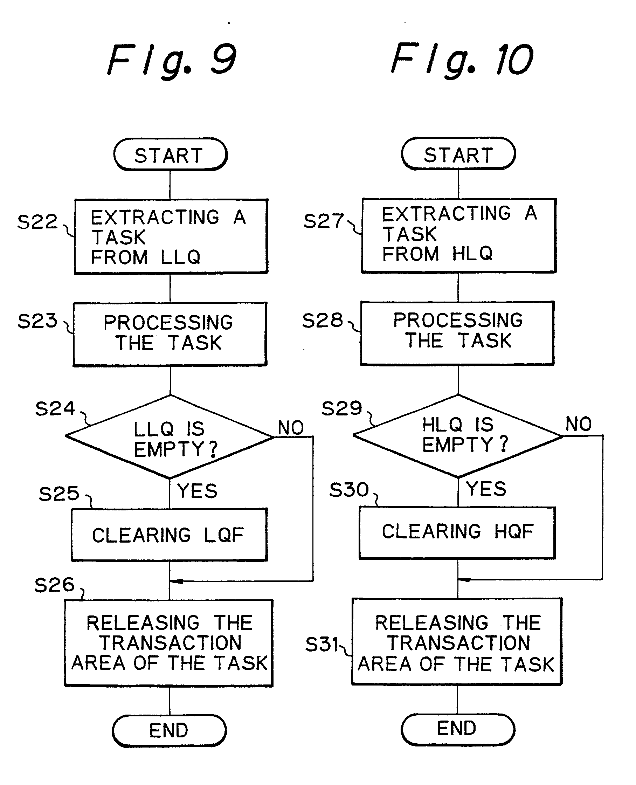

During the task processing procedure P2, as shown in Fig. 8, the CPU 36 watches the high priority level queue flag 42 and the low priority level queue flag 40 (steps S9, S10, and S11). If both flags are "OFF", the CPU 36 goes into a waiting mode. If the high priority level queue flag 42 is "OFF" and the low priority level queue flag 40 is "ON", the CPU 36 executes the LLQ procedure illustrated in Fig. 9 (step S12, which will be explained later), and clears the SC 38 (step S13). If the high priority level queue flag 42 is "ON" but the low priority level queue flag 40 is "OFF", the CPU 36 executes the HLQ procedure illustrated in Fig. 10 (step S14, which will be explained later), and if the contents of the SC 38 has a value less than three (step S15), the CPU 36 adds one to the contents of the scan counter 38 (step 16). If the value stored in the scan counter 38 is already equal to three; the value remains the same.

If the high priority level queue flag 42 is "ON" and the low priority level queue flag 40 is "ON" but the value of the contents of the scan counter 38 is three (step S17), the CPU 36 executes the LLQ procedure (step S18) and clears the scan counter 38. If the value of contents of the scan counter 38 is less than three at step S17, the CPU 36 executes the HLQ procedure (step S20) and adds one to the value of the contents of the scan counter 38 (step S21).

Fig. 9 and Fig. 10 illustrate the LLQ procedure and the HLQ procedure. In the LLQ procedure, the CPU 36 extracts a low priority task from the low priority level queue 44 (step S22) and executes the task (step 23). If the low priority level queue 44 is empty, which means the low priority level queue counter 50 (see Fig. 5) is zero (step S24), the CPU 36 clears the low priority level queue flag 40 (step S25) and releases the transaction area of the task (step S26). If the CPU 36 detects that the low priority level queue 44 is not empty in the step S24, the CPU will not clear the low priority level queue flag 40 and waits for the next basic execution interval.

The HLQ procedure illustrated in Fig. 10 is quite similar to the LLQ procedure illustrated in Fig. 9. In the HLQ procedure, the CPU 36 extracts a task (of high priority level) from the high priority level queue 46 (step S27) and executes the task (step 28). If the high priority level queue 46 is empty (step S29), which means the high priority level queue counter 48 (see Fig. 5) becomes zero, the CPU 36 clears the high priority level queue flag 42 (step S30) and releases the transaction area of the task (step S31). If the CPU 36 detects that the high priority level queue 46 is not empty in the step S29, the CPU will not clear the high priority level queue flag 42 and waits for the next basic execution interval.

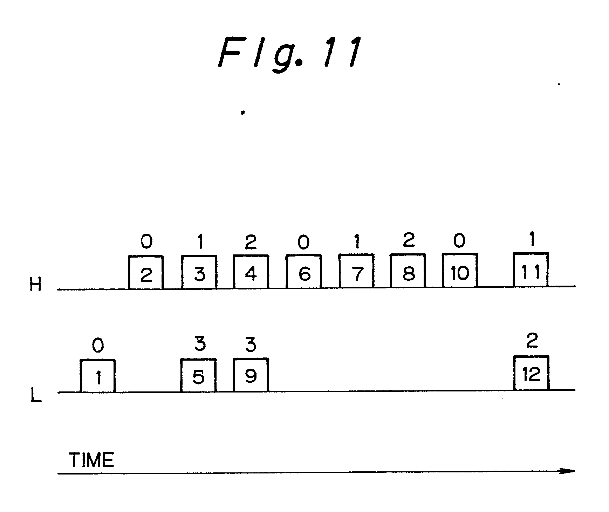

Fig. 11 illustrates an example of an order in which tasks would be executed in accordance with the invention. In

Fig. 11, a stream H of the high priority tasks and a stream L of the low priority tasks are provided. Each box represents a separate task. The location of the box on the time line represents the time at which the CPU 36 receives an instruction that the task be executed. Further, the numbers in the boxes represent the order of execution of the tasks, and numbers above the boxes represent the values stored in the scan counter 38 during the execution of the respective tasks.

For example, the task no. 1 (performed first) has a low priority but is executed first because there is no high priority task identified in the high level queue at that time. Then, the second, third and fourth tasks (nos. 2, 3 and 4), which are high priority tasks are successively executed even though there is a fifth task (no. 5) is identified in the low priority level queue at the same time of the third task. However, even though a next high priority task (the sixth task, no. 6) has also been identified, the CPU 36 executes the low priority fifth task because the scan counter 38 contains a stored value of three. After that, the CPU 36 further executes task nos. 6, 7 and 8 in succession without executing task no. 9. However, when the contents of the scan counter 38 has a value of three again, the CPU 36 executes the task no. 9 automatically. Therefore, according to the invention, it becomes possible to prevent low priority tasks from being left unexecuted for without long periods of time.

It will be understood that the above description of the present invention is susceptible to various modifications, changes and adaptations, and the same are intended to be comprehended within the meaning and range of equivalents of the appended claims.

For example, in a case where there are N different priority levels in tasks, (N: integer, N>1), N-1 counters may be required to count execution of tasks. For example, if three priority levels are present, i.e. "high", "middle", and "low", a first counter counts the number of consecutive executions of high priority level tasks, and the preferred embodiment would be directly applicable to the performance of tasks classified as high and middle priority levels. Further, a second counter counts the number of consecutive executions of high or middle priority level tasks. The first counter will be cleared if a low or middle priority level task is executed, and the second counter will be cleared if a low priority task is executed.

In this simple example, if it is assumed that a high priority level task is not to be executed three times consecutively, and that a higher middle priority level task is not to be executed more than seven times consecutively, then if high, middle and low task executions are represented in a series with the capital letters H, M or L respectively, a typical period order of execution might be, for example:

H,H,H,M,H,M,H,L,H,M,H,M,H,M,H,L,H,M,L,H,M,L,H,-
H,M,L,... .

## Claims

1. A method of managing tasks, comprising the steps of:

(a) classifying each of the tasks at a respective one of a first priority level and a second priority level, the tasks classified at the first priority level each having a priority which is higher than a priority of the tasks classified at the second priority level;

(b) ordering the tasks classified at the first priority level in a first queue and ordering the tasks classified at the second priority level in a second queue;

(c) dispatching a task classified at the first priority level if at least one task is ordered in the first queue, and deleting the dispatched task from the first queue;

(d) if no task is ordered in the first queue so that no task is dispatched in step (c), dispatching a task classified at the second priority level if at least one task is ordered in the second queue, and deleting the dispatched task from the second queue;

(e) executing the task dispatched in step (c) or step (d);

(f) repeatedly performing said steps (c), (d) and (e);

(g) counting a number of tasks classified at the first priority level consecutively executed in said step (d) without executing a task classified at the second priority level; and

(h) dispatching and executing a task classified at the second priority level when the counted number reaches a predetermined value.

2. A task managing method according to claim 1, wherein said step (g) includes the step of incrementing a number stored in a counter each consecutive time a task classified at the first priority level is executed in said step (e); and said step (h) includes the steps of dispatching and executing a task classified at the second priority level when the number stored in the counter reaches the predetermined value, and clearing the counter when a task classified at the second priority level is executed.

3. A task managing system for executing tasks having different levels of priority, comprising:

(a) a first memory means for storing instructions for task managing;

(b) a second memory means for providing memory areas for task processing;

(c) a counter means; and

(d) a task processing means responsive to the instructions stored in said first memory means and connected to said second memory means and said counter means, for executing the instructions, said task processing means including means for performing the following steps:

(d1) classifying each of the tasks at a respective one of a first priority level and a second priority level, the tasks classified at the first priority level each having a priority which is higher than a priority of the tasks classified at the second priority level;

(d2) ordering the tasks classified at the first priority level in a first queue, ordering the tasks classified at the second priority level in a second queue and storing the first and second queues in said second memory means;

(d3) dispatching a task classified at the first priority level if at least one task is ordered in the first queue, and deleting the dispatched task from the first queue;

(d4) if no task is ordered in the first queue so that no task is dispatched in step (d3), dispatching a task classified at the second priority level if at least one task is ordered in the second queue, and deleting the dispatched task from the second queue;

(d5) executing the task dispatched in step (d3) or step (d4);

(d6) repeatedly performing steps (d3), (d4) and (d5);

(d7) counting a number of tasks classified at the first priority level consecutively executed in step (d4) without executing a task classified at the second priority level and storing the number in said counter means; and

(d8) dispatching and executing a task classified at the second priority level when the counted number reaches a predetermined value.

# F I g. 1

10

14a  18a  SWITCHING
NETWORK

18b  14b

16a  18c

18d  16b

CENTRAL
CONTROLLER  12

Fig. 2

## Fig. 3

EP 0 400 500 A2

# F I g. 4

# Fig. 5

_34_

| |
|---|
| |
| SCAN COUNTER |
| |
| LQF · HQF |
| HLQC |
| LLQC |
| HLQHP |
| HLQTP |
| LLQHP |
| LLQTP |
| IQHP |
| IQTP |
| |
| TRANSACTION #0 |
| TRANSACTION #1 |
| ⋮    ⋮    ⋮ |
| TRANSACTION #n |
| |

# Fig. 6

QUEUE

| HP |
|----|
| TP |

TR 1

| NP 1 |
|------|
|      |
|  ⋮   |

TR2

| NP2 |
|-----|
|     |
|  ⋮  |

TRn

| NP=Null |
|---------|
|         |
|   ⋮     |

# F I g. 7

START

S1 — DETECTING A NEW TASK

S2 — PREPARING A TRANSACTION AREA FOR THE TASK

S3 — WRITING THE TASK TO THE TRANSACTION AREA

S4 — PRIORITY ? — LOW / HIGH

S5 — REGISTERING THE TASK IN HLQ

S7 — REGISTERING THE TASK IN LLQ

S6 — SET HQF

S8 — SET LQF

END

EP 0 400 500 A2

# Fig. 8

# Fig. 9

```
        ( START )
           │
S22 ┌──────────────┐
    │ EXTRACTING A │
    │ TASK         │
    │ FROM LLQ     │
    └──────────────┘
           │
S23 ┌──────────────┐
    │ PROCESSING   │
    │ THE TASK     │
    └──────────────┘
           │
S24       ╱╲
        ╱      ╲   NO
      ╱  LLQ IS  ╲────┐
      ╲  EMPTY ? ╱    │
        ╲      ╱      │
          ╲  ╱        │
        YES │         │
S25 ┌──────────────┐  │
    │ CLEARING LQF │  │
    └──────────────┘  │
           │◄─────────┘
S26 ┌──────────────┐
    │ RELEASING THE│
    │ TRANSACTION  │
    │ AREA OF THE  │
    │ TASK         │
    └──────────────┘
           │
        ( END )
```

# Fig. 10

```
        ( START )
           │
S27 ┌──────────────┐
    │ EXTRACTING A │
    │ TASK         │
    │ FROM HLQ     │
    └──────────────┘
           │
S28 ┌──────────────┐
    │ PROCESSING   │
    │ THE TASK     │
    └──────────────┘
           │
S29       ╱╲
        ╱      ╲   NO
      ╱  HLQ IS  ╲────┐
      ╲  EMPTY ? ╱    │
        ╲      ╱      │
          ╲  ╱        │
        YES │         │
S30 ┌──────────────┐  │
    │ CLEARING HQF │  │
    └──────────────┘  │
           │◄─────────┘
S31 ┌──────────────┐
    │ RELEASING THE│
    │ TRANSACTION  │
    │ AREA OF THE  │
    │ TASK         │
    └──────────────┘
           │
        ( END )
```

# F I g. 11